# EUROPEAN PATENT SPECIFICATION

(11) **EP 3 288 196 B1**
(45) Date of publication and mention of the grant of the patent: **31.08.2022**
(21) Application number: 15889730.6
(22) Date of filing: 10.11.2015
(51) Int. Cl.: H04B 10/27, H04L 12/28, H04Q 11/00

(54) **OPTICAL ACCESS MODULE**
OPTISCHES ZUGANGSMODUL
MODULE D'ACCÈS OPTIQUE

(30) Priority: 24.04.2015 CN 201510202091
(43) Date of publication of application: 28.02.2018
(73) Proprietor: ZTE Corporation, Shenzhen, Guangdong 518057 (CN)
(72) Inventor: DIAO, Yuanjiong, Shenzhen Guangdong 518057 (CN); LI, Mingsheng, Shenzhen Guangdong 518057 (CN); JIANG, Xiaolin, Shenzhen Guangdong 518057 (CN)
(74) Representative: Regimbeau
(86) International application number: PCT/CN2015/094232
(87) International publication number: WO 2016/169247

(56) References cited:
- EP-A1- 2 056 525
- WO-A1-2014/206144
- CN-A- 103 746 886
- CN-A- 103 746 925
- US-B1- 8 665 949

## Description

### TECHNICAL FIELD

The present invention relates to the field of communications and, in particular, to an optical access module.

### BACKGROUND

Optical fiber has become a high-quality transmission medium in communications due to its strong anti-interference capability, small signal attenuation and large channel capacity. However, a plenty of standards exist concerning optical fiber types, optical fiber connectors and optical fiber drivers and have significant differences. For example, according to the type of optical fibers, optical fibers include monomode optical fibers and multimode optical fibers. For fiber core alignment, LC, FC, SC and other various optical fiber connectors are available in the industry. Photoelectric conversion drivers take use of different wavelengths, e.g., C-band and L-band, and implement transmission at different distances, e.g., 10 km, 40 km and 80 km. In spite of this, an electrical portion of photoelectric conversion has a small change. Thus, in the industry, cages, such as gigabit interface converter (GBIC), 10-gigabit small form-factor pluggable transceiver (XFP), small form-factor pluggable transceiver (SFP) and centum gigabits form pluggable (CFP), are commonly used for active devices such as data and transmission devices to provide a unified electrical interface, and photoelectric conversion drivers are integrated into miniaturized optical module packages including GBIC, XFP, SFP and CFP. This allows to configure optical modules as needed, use different optical modules to match with different requirements on optical fiber type and optical fiber connection, and reduces initial device costs.

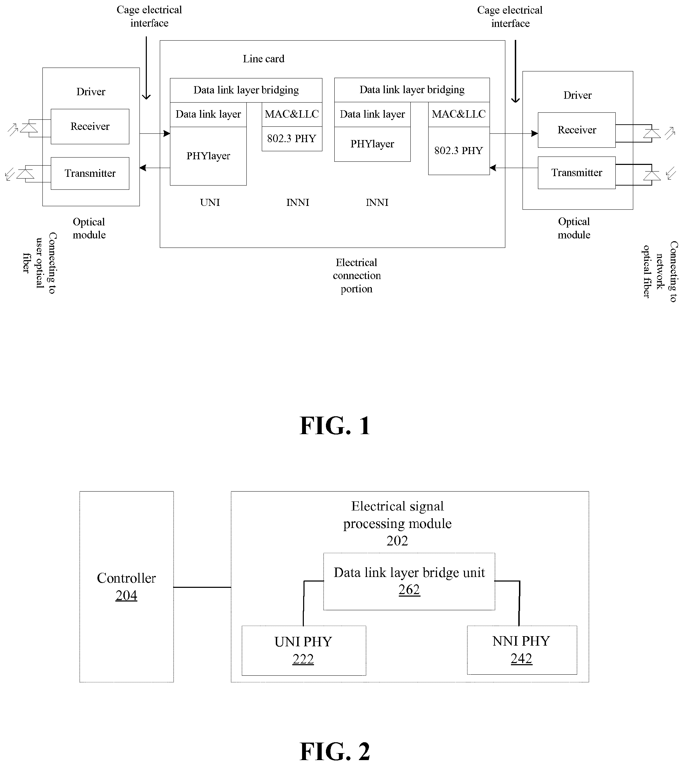

FIG. 1 is a network block diagram where an optical line terminal (OLT) uses a dedicated line card and common optical modules in the related art. As illustrated in FIG. 1, an OLT device under a metropolitan area network implements an existing multiuser access method on an optical distribution network (ODN) of a passive optical network (PON). Different from the case where an optical access module is inserted into a common switch, an electrical signal processing portion of the OLT includes two parts: a line card part and a central Ethernet switch part. The central Ethernet switch portion is similar to a general-purpose Ethernet switch, but does not directly switch packets between Ethernet ports of optical module cages; rather, the central Ethernet switch portion switches packets between different line cards. The OLT provides, on the line card, functions below a user data link layer, which include PON media access control (MAC) and PON physical layer (PHY) functions. After the data link layers are bridged through an Ethernet, the central Ethernet switch part is connected by an Ethernet PHY.

In the related art, the optical module provides photoelectric conversion only on the physical layer; a transmitter typically includes a semiconductor laser, such as a distributed feedback laser, for modulating an electrical signal into an optical signal and transmitting the optical signal; and a receiver typically includes a semiconductor photodetector, such as an avalanche photodiode, for demodulating an optical signal into an electrical signal. The optical module in the related art is equivalent to functions below a physical medium dependent (PMD) layer of a physical layer device (PLD) in Ethernet standards defined by IEEE. However, on an access network, in addition to point-to-point Ethernet fibers, multiple other medium access techniques are available, and different access techniques share one medium, such as gigabit-capable (GPON), Ethernet passive optical network (EPON) ODN and hybrid fiber-coaxial (HFC). In this case, a common optical module configured in an optical module cage of an Ethernet switch or router cannot be used to directly connect these networks. Thus, a great many dedicated access devices are produced in the industry, such as an OLT device and a cable modem terminal system (CMTS). The OLT has a dedicated line card for processing ODN optical fibers shared in a time division multiple access mode. The CMTS has dedicated line card for processing HFC optical fibers shared in a frequency division multiple access mode. Line cards of such devices use the Ethernet switch as the core to switch packets.

However, the line card is far from easy to use as compared to the optical module. SFP optical modules purchased by operators can be easily used for switches and routers of different operators, while OLT and CMTS line cards can be inserted only into devices of specific operators even if the Ethernet switch core of the device of another operator has a surplus of capacity.

An effective solution remains to be provided to solve the problem in the related art where a general-purpose Ethernet switch and a general-purpose IP router cannot be connected, through an optical module, directly to various networks such as an ODN and an HFC and must be connected to devices such as an OLT and a CMTS under the general-purpose Ethernet switch and the general-purpose IP router.

Document CN103746925A discloses a fiber wireless (FiWi) converged network.

Document CN103746886A discloses a FiWi node including a forwarding module and physical interfaces.

Document US8665949B1 discloses a method for generating a physical layer (PHY) data unit for transmission via a communication channel.

Document EP2056525A1 discloses an Ethernet service configuration method in a passive optical network (PON).

Document WO2014206144A1 discloses an optical network unit (ONU) including a PON MAC module and a processing module.

### SUMMARY

An object of embodiments of the present invention is to provide an optical access module to at least solve the problem in the related art where a general-purpose Ethernet switch and a general-purpose IP router cannot be connected, through an optical module, directly to various networks such as an ODN and an HFC and must be connected to devices such as an OLT and a CMTS under the general-purpose Ethernet switch and the general-purpose IP router. According to the invention an optical access module according to claim 1 is provided. Further improvements and embodiments are provided in the dependent claims.

Also provided is an optical access module, which includes an electrical signal processing module and a controller. The controller has an addressable IP address or a management address which is not a non-IP address. The electrical signal processing module includes a physical layer user network interface (UNI PHY), a physical layer network-to-network interface (NNI PHY), and a data link layer bridge unit for connecting the user network interface (UNI) to the network to network interface (NNI) on a data link layer. The UNI PHY and the NNI PHY are configured to implement interface functions specified by a designated communication protocol. The data link layer bridge unit is configured to manage a packet forwarded between the UNI PHY and the NNI PHY. The controller is configured to control, according to the management address, the electrical signal processing module to forward the packets to a user equipment or a network equipment corresponding to the management address.

Optionally, the data link layer corresponding to the UNI PHY and the NNI PHY has media access control (MAC) and logical link control (LLC) functions.

Optionally, the data link layer bridge unit includes a packet buffer component and a traffic and flow management (TM) component. The packet buffer component is configured to buffer the packet on the data link layer. The TM component is configured to manage the packet.

Optionally, the packet buffer component is a random-access memory (RAM) and the TM component is a multi-core central processing unit (CPU) or a network processor.

Optionally, the optical access module further includes a photoelectric conversion driver configured to convert an optical signal and an electrical signal into each other.

Optionally, the photoelectric conversion driver includes a receiver and a transmitter. The transmitter is configured to modulate an electrical signal transmitted by the electrical signal processing module into an optical signal and to transmit the optical signal. The receiver is configured to demodulate a received optical signal into an electrical signal and to transmit the electrical signal to the electrical signal processing module.

Optionally, the transmitter includes a semiconductor laser and the receiver includes a semiconductor photodetector.

Optionally, the photoelectric conversion driver includes one or more combinations of the semiconductor laser and the semiconductor photodetector.

Optionally, the optical access module further includes a power module configured to obtain electric energy inputted by a direct-current power source. The electric energy is configured to supply power to the optical access module.

Optionally, the optical access module is applicable to an optical module cage of a switch or router.

Embodiments of the present invention provide an optical access module including an electrical signal processing module and a controller. The electrical signal processing module includes a UNI PHY, a NNI PHY and a data link layer bridge unit configured to connect the user network interface UNI and the network-to-network interface NNI on a data link layer. It can be seen that PHY interfaces and data link layer functions are integrated into the optical access module. This has no need of dedicated GPON, EPON and other line cards and thus solves the problem in the related art where a general-purpose Ethernet switch and a general-purpose IP router cannot be connected, through the optical module, directly to various networks such as an ODN and an HFC and must be connected to devices such as an OLT and a CMTS under the general-purpose Ethernet switch and the general-purpose IP router, thereby reducing the types of active devices that operators need to purchase.

### BRIEF DESCRIPTION OF DRAWINGS

The accompanying drawings described herein are used for providing a further understanding of the present invention and form a part of the present application. The schematic embodiments and descriptions thereof of the present invention are used to explain the present invention, and do not form improper limits to the present invention. In the accompanying drawings:
FIG. 1 is a network block diagram where an optical line terminal (OLT) uses a dedicated line card and common optical modules in the related art;
FIG. 2 is a block diagram of an optical access module according to an embodiment of the present invention;
FIG. 3 is a block diagram of an optical access module according to an alternative embodiment of the present invention;
FIG. 4 is a schematic diagram illustrating a position of the optical access module among network equipment according to the embodiment of the present invention;
FIG. 5 is a block diagram of a GPON OLT optical access module according to an alternative embodiment of the present invention;
FIG. 6 is a schematic diagram illustrating that the optical access module implements software-definable controlled forwarding according to the alternative embodiment of the present invention; and
FIG. 7 is a flowchart of a method used by the optical access module to implement a software-defined flow table according to an embodiment of the present invention.

### DETAILED DESCRIPTION

If not in collision, the embodiments and features therein in the present application may be combined with each other. The present invention will be described hereinafter in detail with reference to the accompanying drawings and in connection with the embodiments.

The present embodiment provides an optical access module. FIG. 2 is a block diagram of the optical access module according to the embodiment of the present invention. As illustrated in FIG. 2, the optical access module includes an electrical signal processing module 202 and a controller 204. The controller 204 has an addressable IP address or an management address which is a non-IP address. The electrical signal processing module 202 includes a physical layer user network interface (UNI PHY) 222, a physical layer network-to-network interface (NNI PHY) 242, and a data link layer bridge unit 262 for connecting a user network interface (UNI) to a network to network interface (NNI) on a data link layer.

The UNI PHY 222 and the NNI PHY 242 are configured to implement interface functions specified by a designated communication protocol.

The data link layer bridge unit 262 is configured to manage at least one packet forwarded between the UNI PHY 222 and the NNI PHY 242.

The controller 204 is configured to control, according to a management address, the electrical signal processing module 202 to forward the packet to a user device or a network device corresponding to the management address.

The present embodiment provides an optical access module including an electrical signal processing module and a controller. The electrical signal processing module includes a UNI PHY, a NNI PHY and a data link layer bridge unit configured to connect the UNI PHY and the NNI PHY on the data link layer. It can be seen that PHY interfaces and data link layer functions are integrated into the optical access module. This has no need of dedicated GPON, EPON and other line cards and thus solves the problem in the related art where a general-purpose Ethernet switch and a general-purpose IP router cannot be connected, through the optical module, directly to various networks such as an ODN and an HFC and must be connected to devices such as an OLT and a CMTS under the general-purpose Ethernet switch and the general-purpose IP router, thereby reducing the types of active devices that operators need to purchase.

In the present embodiment, the data link layer corresponding to the UNI PHY and the NNI PHY has media access control (MAC) and logical link control (LLC) functions.

On this basis, the UNI PHY on the user side and the NNI PHY on the network side implement the functions specified by the designated protocol, and the corresponding data link layer has multiple implementing modes:

(1) When a GPON ODN serves as a transmission medium, the UNI PHY implements PMD functions specified by ITU-T Recommendation G.984.2 and transport layer functions specified by ITU-T Recommendation G.984.3. The data link layer implements control and management of a virtual service port GEMport for multi-user point-to-point logical connections on the transport layer specified by ITU-T Recommendations G.984.3 and G.984.4.

(2) When an EPON ODN serves as a transmission medium, the UNI PHY implements functions specified by IEEE 802.3 Clauses 60 and 65, and the data link layer implements control and management of a logical link identifier (LLID) for multi-user point-to-point logical connections on the transport layer specified by IEEE 802.3 Clauses 57 and 64.

The NNI PHY on the network side uses the PHY specified by the IEEE 802.3 standard, and the data link layer implements the MAC and LLC functions specified by the IEEE 802.3 standard. The NNI PHY on the network side may be connected to the PHY on the physical side of an Ethernet port of a switch or router through an optical module cage of the switch or router.

Optionally, the data link layer bridge unit in the present embodiment may further include a packet buffer component and a traffic and flow management (TM) component. The packet buffer component is configured to buffer the packet on the data link layer. The TM component is configured to manage the packet. The packet buffer component is a random-access memory (RAM) and the TM component is a multi-core central processing unit (CPU) or a network processor.

That is, in the present embodiment, the data link layer bridge unit is used for analysis, modification, forwarding and traffic policing of the data packets forwarded between the UNI PHY and the NNI PHY. The data link layer bridge unit is composed of the packet buffer for buffering packets and the TM for processing packets. The packet buffer is implemented by the RAM as hardware and the TM is implemented by the CPU or the network processor as hardware.

Optionally, in the present embodiment, the optical access module may further include a photoelectric conversion driver configured to convert an optical signal and an electrical signal into each other.

The photoelectric conversion driver includes a receiver and a transmitter. The transmitter is configured to modulate an electrical signal transmitted by the electrical signal processing module into an optical signal and to transmit the optical signal. The receiver is configured to demodulate a received optical signal into an electrical signal and to transmit the electrical signal to the electrical signal processing module. Optionally, the transmitter includes a semiconductor laser, the receiver includes a semiconductor photodetector, and the photoelectric conversion driver includes one or more combinations of the semiconductor laser and the semiconductor photodetector.

That is, in the present embodiment, the photoelectric conversion driver is composed of the receiver and the transmitter. The transmitter typically includes the semiconductor laser, e.g., a distributed feedback laser, for modulating the electrical signal transmitted by the UNI PHY into the optical signal and transmitting the optical signal. The receiver typically includes the semiconductor photodetector, e.g., an avalanche photodiode, for demodulating the optical signal received by an optical fiber on the user side into the electrical signal and transmitting the electrical signal to the UNI PHY. When signals are transmitted using multiple wavelengths within a same optical fiber, a wavelength division multiplexing (WDM) device for dividing/combining the wavelengths needs to be preposed and the driver circuit may further include multiple sets of lasers and photodetectors.

Optionally, in the present embodiment, the optical access module may further include a power module for obtaining electric energy inputted by a direct-current power source. The electric energy is configured to supply power to the optical access module. That is, the power module obtains a direct-current power input from the optical module cage of the switch or router and then distributes the power input to other components of the optical access module. The optical access module may further include an electrically erasable programmable read-only memory (EEPROM) for storing information. The EEPROM does not lose information even when powered down. Additionally, it is noted that the optical access module described in the present embodiment is applicable to an optical module cage of a general-purpose switch or router.

The present invention will be illustrated below in connection with an alternative embodiment of the present invention.

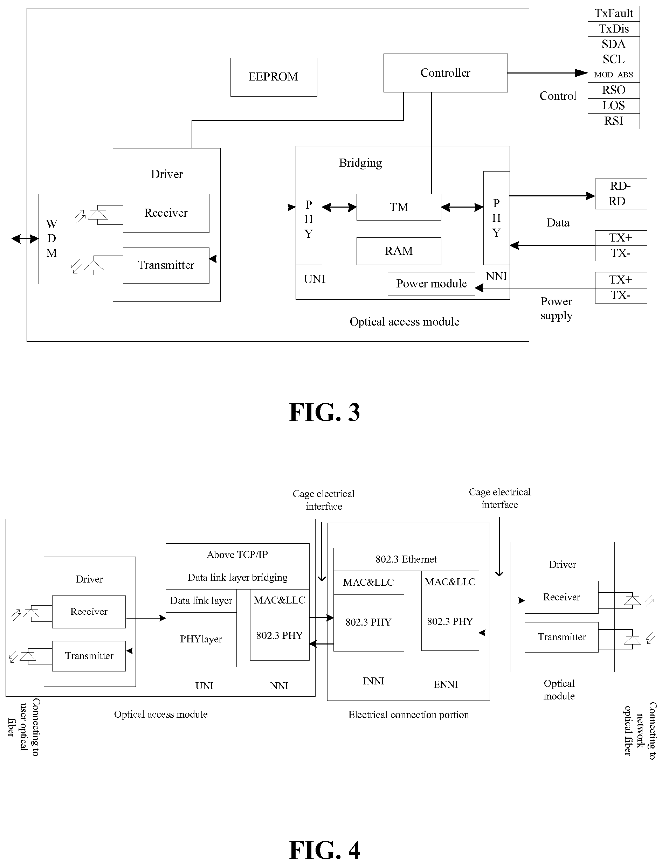

The present alternative embodiment provides an optical access module, where PHY and MAC functions are integrated into a miniaturized XFP, SFP or CFP. FIG. 3 is a block diagram of an optical access module according to an alternative embodiment of the present invention. As illustrated in FIG. 3, the optical access module includes a photoelectric conversion driver, an electrical signal processing module, a power module, a controller and an EEPROM that does not lose information even when powered down.

The electrical signal processing module includes a UNI PHY, an NNI PHY, and a data link layer bridge unit for connecting the UNI to the NNI on a data link layer.

In the present alternative embodiment, the UNI PHY on the user side and the data link layer have multiple implementing modes:

(1) When a GPON ODN serves as a transmission medium, the UNI PHY implements PMD functions specified by ITU-T Recommendation G.984.2 and transport layer functions specified by ITU-T Recommendation G.984.3. The data link layer implements control and management of a virtual service port GEMport for multi-user point-to-point logical connections on the transport layer specified by ITU-T Recommendations G.984.3 and G.984.4;

(2) When an EPON ODN serves as a transmission medium, the UNI PHY implements functions specified by IEEE 802.3 Clauses 60 and 65, and the data link layer implements control and management of an LLID for multi-user point-to-point logical connections on the transport layer specified by IEEE 802.3 Clauses 57 and 64.

The NNI PHY on the network side uses the PHY specified by the IEEE 802.3 standard, and the data link layer implements the MAC and LLC functions specified by the IEEE 802.3 standard. The NNI PHY on the network side may be connected to the PHY on the physical side of an Ethernet port of a switch or router through an optical module cage of a switch or router.

Additionally, the data link layer bridge unit is used for analysis, modification, forwarding and traffic policing of the data packets forwarded between the UNI PHY and the NNI PHY. The data link layer bridge unit is composed of a packet buffer for buffering packets and a TM for processing packets. The packet buffer is implemented by a RAM as hardware and the TM is implemented by a CPU or a network processor as hardware.

In the present alternative embodiment, the controller has an addressable IPv4/IPv6 or a management address (e.g., an Ethernet MAC address) which is a non-IP address, and the packets can be forwarded by the TM to enable an intra-band communication between the controller and a user/network equipment. Additionally, the controller receives a control signal of an upper-level CPU from an out-band channel and through a control signal interface provided by the optical module cage. The control signal is, for example, an Inter-Integrated Circuit (I2C) signal.

The power module obtains a direct-current power input from the optical module cage of the switch or router and then distributes the power input to other components of the optical access module.

The photoelectric conversion driver is composed of a receiver (corresponding to the receiver in the present embodiment) and a transmitter (corresponding to the transmitter in the present embodiment). The transmitter typically includes a semiconductor laser, e.g., a distributed feedback laser, for modulating an electrical signal transmitted by the UNI PHY into an optical signal and transmitting the optical signal. The receiver typically includes a semiconductor photodetector, e.g., an avalanche photodiode, for demodulating an optical signal received by optical fibers on the user side into an electrical signal and transmitting the electrical signal to the UNI PHY. When signals are transmitted using multiple wavelengths within a same optical fiber, a WDM device for dividing/combining the wavelengths needs to be preposed and the driver circuit may further include multiple sets of lasers and photodetectors.

As compared to an optical module in the related art, the optical access module in the present alternative embodiment provides PHY and MAC layer functions and has no need of dedicated GPON, EPON and other line cards. Users can access a shared medium such as a PON ODN simply after the optical access module is inserted into an optical module cage of a general-purpose switch or router. This significantly reduces the types of active devices that operators need to purchase. Moreover, the optical access module may be deployed as required by the development of the ODN network. That is, the present alternative embodiment overcomes the problem in the related art where a general-purpose Ethernet switch and a general-purpose IP router cannot be connected, through an optical module, directly to various networks such as an ODN and an HFC and must be connected to devices such as an OLT and a CMTS under the general-purpose Ethernet switch and the general-purpose IP router. This problem causes the failure to meet operators' requirements of reducing device types, cutting networking costs and flexibly accessing ODN, HFC and other networks. The present alternative embodiment provides an optical access module that can be directly inserted into a switch or an IP router and that uses XFP, SFP, CFP and other miniaturized packages.

The present alternative embodiment will be described below in detail with reference to the accompanying drawings.

FIG. 4 is a schematic diagram illustrating a position of the optical access module among network equipment according to the embodiment of the present invention. As illustrated in FIG. 4, electrical signals between multiple ports can be processed by one general-purpose Ethernet switch, and Ethernet packets can be switched between the multiple ports. Each port has its own MAC, LLC and PHY functions specified by IEEE 802.3. PHY PMD sublayer functions are related to media used by the ports, e.g., a traditional RJ45 twisted-pair interface, or optical module cage such as SFP, XFP, CFP. The electrical characteristics of these cages conform to industry standards specified by the Multi-Source Agreement (MSA) organization, such as SFF-8431, SFF-8472 and INF-8077i. An optical access module that uses XFP, SFP or CFP package is inserted to implement a photoelectric conversion function on the PMD sublayer. The optical access module in the solution of the present invention not only implements a photoelectric conversion function of a common optical module, but also implements PON MAC functions with a multi-user shared ODN as a medium and enables bridging between back-to-back PON MAC on the user side and Ethernet MAC on the network side. The optical access module uses a same hardware package as that in the optical module in the related art and can be directly inserted into the optical module cage of the switch.

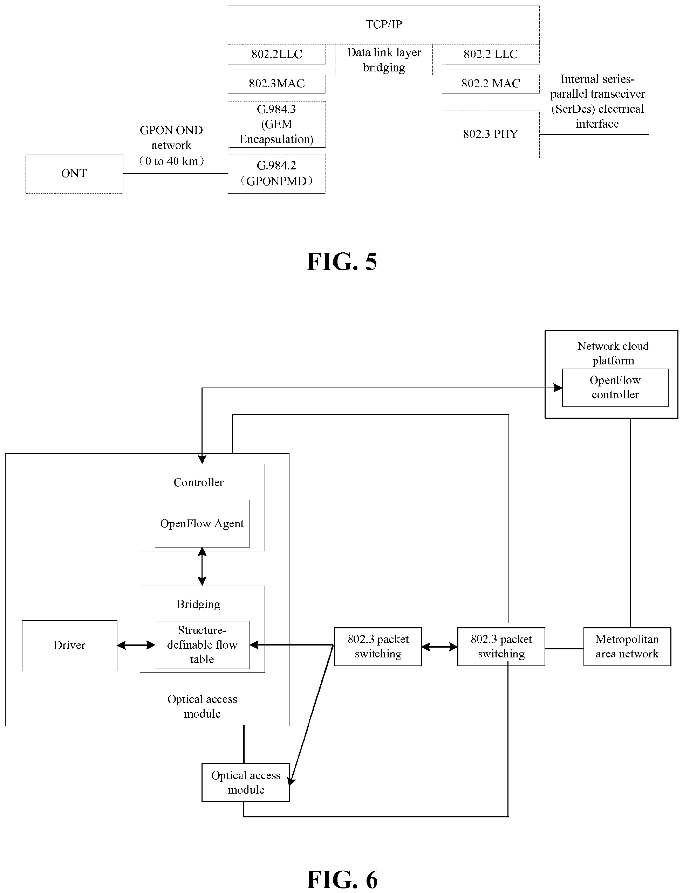

FIG. 5 is a block diagram of a GPON OLT optical access module according to an alternative embodiment of the present invention. As illustrated in FIG. 5, the UNI PHY implements PMD functions specified by ITU-T Recommendation G.984.2 and transport layer functions specified by ITU-T Recommendation G.984.3. The data link layer implements control and management of a GEMport for multi-user point-to-point logical connections on the transport layer specified by ITU-T Recommendations G.984.3 and G.984.4. The data link layer can decapsulate data above an IEEE 802.3 MAC layer from a GEMport GEM encapsulation, bridge the user side to the network side, and then be connected to the PHY of the Ethernet port of the general-purpose switch through a data transmission channel SerDes provided by the optical module cage of the switch. Above a link bridge layer, the controller provides an addressable IP address and an IP protocol stack for communicating with a network terminal on the user side or other remotely connected equipment on the network side.

FIG. 6 is a schematic diagram illustrating that the optical access module implements software-definable controlled forwarding according to the alternative embodiment of the present invention. As illustrated in FIG. 6, an OpenFlow Agent can be loaded into the controller of the optical access module. Using a control and forwarding separation principle of an SDN, the remote OpenFlow controller controls packet forwarding of the optical access module through the OpenFlow protocol. The OpenFlow Agent converts the control by the OpenFlow controller into an internal instruction of the optical access module and performs software programming for a structure-definable flow table in a bridging part to change the behavior in which a user packet is forwarded.

When a PON OLT in the related art processes packets, a structure of a forwarded flow table and a forwarding logic of the flow table are determined during a system design. A process of redefining the flow table by the controller is added in the present alternative embodiment. The process is as follows: in a forwarding state, when the number of packets in a receive buffer returns to zero, a packet forwarding flow line of the optical access module will not enter an idle state immediately, but checks whether the controller needs to modify, before the flow line processes next batch of packets, the structure of the flow table and a processing flow; if the modification is needed, the structure of the flow table and a processing sequence in the flow line are rearranged according to an instruction of the controller; and after the rearrangement is completed, the controller is notified of a case where the flow line enters a pending state, and waits for an instruction on next state transition from the controller.

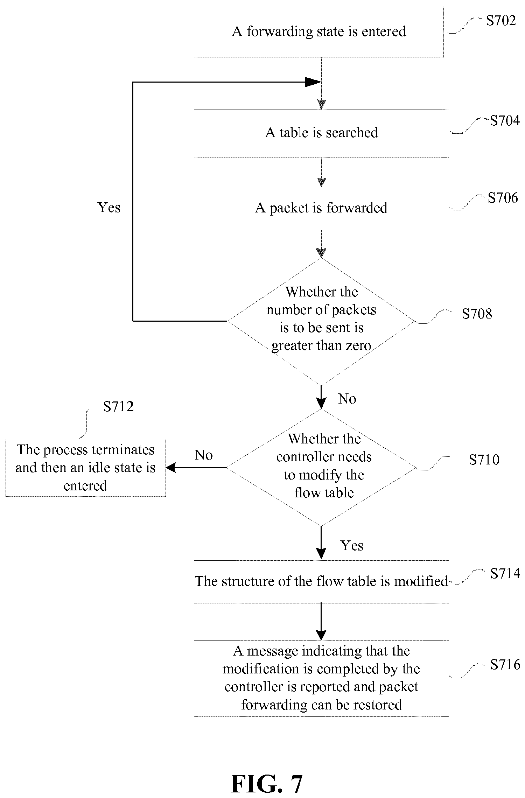

FIG. 7 is a flowchart of a method used by the optical access module to implement a software-defined flow table according to an embodiment of the present invention. As illustrated in FIG. 7, the method includes steps described below.

In step S702, a forwarding state is entered.

In step S704, a table is searched.

In step S706, a packet is forwarded.

In step S708, it is determined whether the number of packets to be sent is greater than zero; if the determination result is yes, the process goes to step S704; or, if the determination result is no, the process goes to step S710.

In step S710, it is determined whether the controller needs to modify the flow table; if the determination result is no, the process goes to step S712; or if the determination result is yes, the process goes to step S714.

In step S712, the process terminates and an idle state is entered.

In step S714, the structure of the flow table is modified.

In step S716, a message is reported indicating that the modification is completed by the controller and packet forwarding can be restored.

The above are only alternative embodiments of the present invention and are not intended to limit the present invention.

### INDUSTRIAL APPLICABILITY

Embodiments of the present invention provide an optical access module including an electrical signal processing module and a controller. The electrical signal processing module includes a UNI PHY, a NNI PHY and a data link layer bridge unit configured to connect the user network interface UNI and the network-to-network interface NNI on a data link layer. It can be seen that PHY interfaces and data link layer functions are integrated into the optical access module. This has no need of dedicated GPON, EPON and other line cards and thus solves the problem in the related art where a general-purpose Ethernet switch and a general-purpose IP router cannot be connected, through the optical module, directly to various networks such as an ODN and an HFC and must be connected to devices such as an OLT and a CMTS under the general-purpose Ethernet switch and the general-purpose IP router, thereby reducing the types of active devices that operators need to purchase.

## Claims

1. An optical access module comprising an electrical signal processing module (202) and a controller (204), **characterized in that** the controller (204) has an addressable IP address or a management address which is a non-IP address, and the electrical signal processing module (202) includes: a physical layer user network interface, UNI PHY, (222), a physical layer network-to-network interface, NNI PHY, (242) and a data link layer bridge unit (262) for connecting the user network interface, UNI, to the network-to-network interface, NNI, on a data link layer, wherein the UNI PHY (222) and the NNI PHY (242) are configured to implement interface functions specified by a designated communication protocol; the data link layer bridge unit (262) is configured to manage a packet forwarded between the UNI PHY (222) and the NNI PHY (242); and the controller (204) is configured to control, according to the management address, the electrical signal processing module (202) to forward the packet to a user equipment or a network equipment corresponding to the management address.

2. The optical access module of claim 1, wherein the data link layer corresponding to the UNI PHY (222) and the NNI PHY (242) has media access control, MAC, and logical link control, LLC, functions.

3. The optical access module of claim 2, wherein the data link layer bridge unit (262) comprises:
a packet buffer component and a traffic and flow management, TM, component, wherein
the packet buffer component is configured to buffer the packet on the data link layer; and
the TM component is configured to manage the packet.

4. The optical access module of claim 3, wherein the packet buffer component is a random-access memory, RAM, and the TM component is a multi-core central processing unit, CPU, or a network processor.

5. The optical access module of claim 1, further comprising:
a photoelectric conversion driver configured to convert an optical signal and an electrical signal into each other.

6. The optical access module of claim 5, wherein the photoelectric conversion driver comprises a receiver and a transmitter, wherein the transmitter is configured to modulate an electrical signal transmitted by the electrical signal processing module (202) into an optical signal and to transmit the optical signal; and
the receiver is configured to demodulate a received optical signal into an electrical signal and to transmit the electrical signal to the electrical signal processing module (202).

7. The optical access module of claim 6, wherein the transmitter comprises a semiconductor laser, and the receiver comprises a semiconductor photodetector.

8. The optical access module of claim 7, wherein the photoelectric conversion driver comprises one or more combinations of the semiconductor laser and the semiconductor photodetector.

9. The optical access module of claim 1, further comprising:
a power module configured to obtain electric energy inputted by a direct-current power source, wherein the electric energy is configured to supply power to the optical access module.

10. The optical access module of any one of claims 1 to 9, wherein the optical access module is applicable to an optical module cage of a switch or router.

## Patentansprüche

1. Optisches Zugangsmodul, das ein elektrisches Signalverarbeitungsmodul (202) und eine Steuerung (204) umfasst, **dadurch gekennzeichnet, dass** die Steuerung (204) eine adressierbare IP-Adresse oder eine Verwaltungsadresse, die eine Nicht-IP-Adresse ist, hat und das elektrische Signalverarbeitungsmodul (202) Folgendes beinhaltet: eine Bitübertragungsschicht-Benutzernetzwerkschnittstelle, UNI PHY, (222), eine Bitübertragungsschicht-Netzwerk-zu-Netzwerk-Schnittstelle, NNI PHY, (242) und eine Datenverbindungsschichtbrückeneinheit (262) zum Verbinden der Benutzernetzwerkschnittstelle, UNI, mit der Netzwerk-zu-Netzwerk-Schnittstelle, NNI, auf einer Datenverbindungsschicht, wobei
die UNI PHY (222) und die NNI PHY (242) dazu ausgelegt sind, Schnittstellenfunktionen, die von einem angegebenen Kommunikationsprotokoll spezifiziert sind, zu implementieren;
die Datenverbindungsschichtbrückeneinheit (262) dazu ausgelegt ist, ein Paket, das zwischen der UNI PHY (222) und der NNI PHY (242) weitergeleitet wird, zu verwalten; und
die Steuerung (204) dazu ausgelegt ist, das elektrische Signalverarbeitungsmodul (202) gemäß der Verwaltungsadresse zu steuern, um das Paket zu einer Teilnehmereinrichtung oder einer Netzwerkeinrichtung, die der Verwaltungsadresse entspricht, weiterzuleiten.

2. Optisches Zugangsmodul nach Anspruch 1, wobei die Datenverbindungsschicht, die der UNI PHY (222) und der NNI PHY (242) entspricht, Medienzugriffssteuerungs(MAC)- und Logikverbindungssteuer(LLC)-Funktionen aufweist.

3. Optisches Zugangsmodul nach Anspruch 2, wobei die Datenverbindungsschichtbrückeneinheit (262) Folgendes umfasst:
eine Paketpufferkomponente und eine Verkehrs- und Flussverwaltungs(TM)-Komponente, wobei
die Paketpufferkomponente dazu ausgelegt ist, das Paket auf der Datenverbindungsschicht zu puffern; und
die TM-Komponente dazu ausgelegt ist, das Paket zu verwalten.

4. Optisches Zugangsmodul nach Anspruch 3, wobei die Paketpufferkomponente ein Direktzugriffsspeicher, RAM, ist und die TM-Komponente eine zentrale Verarbeitungseinheit, CPU, mit mehreren Kernen oder ein Netzwerkprozessor ist.

5. Optisches Zugangsmodul nach Anspruch 1, das ferner Folgendes umfasst:
einen photoelektrischen Umwandlungstreiber, der dazu ausgelegt ist, ein optisches Signal und ein elektrisches Signal ineinander umzuwandeln.

6. Optisches Zugangsmodul nach Anspruch 5, wobei der photoelektrische Umwandlungstreiber einen Empfänger und einen Sender umfasst, wobei
der Sender dazu ausgelegt ist, ein elektrisches Signal, das vom elektrischen Signalverarbeitungsmodul (202) übertragen wird, in ein optisches Signal zu modulieren und das optische Signal zu übertragen; und
der Empfänger dazu ausgelegt ist, ein empfangenes optisches Signal in ein elektrisches Signal zu demodulieren und das elektrische Signal zum elektrischen Signalverarbeitungsmodul (202) zu übertragen.

7. Optisches Zugangsmodul nach Anspruch 6, wobei der Sender einen Halbleiterlaser umfasst und der Empfänger einen Halbleiterphotodetektor umfasst.

8. Optisches Zugangsmodul nach Anspruch 7, wobei der photoelektrische Umwandlungstreiber eine oder mehrere Kombinationen des Halbleiterlasers und des Halbleiterphotodetektors umfasst.

9. Optisches Zugangsmodul nach Anspruch 1, das ferner Folgendes umfasst:
ein Strommodul, das dazu ausgelegt ist, elektrische Energie, die von einer Gleichstromquelle eingegeben wird, zu erhalten, wobei die elektrische Energie dazu ausgelegt ist, dem optischen Zugangsmodul Strom zuzuführen.

10. Optisches Zugangsmodul nach einem der Ansprüche 1 bis 9, wobei das optische Zugangsmodul auf einen optischen Modulkäfig eines Switches oder eines Routers anwendbar ist.

## Revendications

1. Module d'accès optique comprenant un module de traitement de signal électrique (202) et un contrôleur (204), **caractérisé en ce que** le contrôleur (204) possède une adresse IP adressable ou une adresse de gestion qui est une adresse non-IP, et le module de traitement de signal électrique (202) comprend : une interface réseau utilisateur de couche physique, UNI PHY, (222), une interface réseau/réseau de couche physique, NNI PHY, (242), et une unité passerelle de couche de liaison de données (262) destinée à relier l'interface réseau utilisateur, UNI, à l'interface réseau/réseau, NNI, sur une couche de liaison de données, dans lequel
la UNI PHY (222) et la NNI PHY (242) sont configurées pour mettre en œuvre des fonctions d'interface spécifiées par un protocole de communication désigné ;
l'unité passerelle de couche de liaison de données (262) est configurée pour gérer un paquet envoyé entre la UNI PHY (222) et la NNI PHY (242) ; et
le contrôleur (204) est configuré pour contrôler, selon l'adresse de gestion, le module de traitement de signal électrique (202) afin d'envoyer le paquet à un équipement utilisateur ou un équipement réseau correspondant à l'adresse de gestion.

2. Module d'accès optique selon la revendication 1, dans lequel la couche de liaison de données correspondant à la UNI PHY (222) et à la NNI PHY (242) possède des fonctions de contrôle d'accès au support, MAC, et de contrôle de liaison logique, LLC.

3. Module d'accès optique selon la revendication 2, dans lequel l'unité de passerelle de couche de liaison de données (262) comprend :
un composant tampon de paquets et un composant de gestion de trafic et de débit, TM, dans lequel
le composant tampon de paquets est configuré pour mettre en tampon le paquet sur la couche de liaison de données ; et
le composant TM est configuré pour gérer le paquet.

4. Module d'accès optique selon la revendication 3, dans lequel
le composant tampon de paquets est une mémoire vive, RAM, et le composant TM est une unité centrale de traitement multicœurs, CPU, ou un processeur réseau.

5. Module d'accès optique selon la revendication 1, comprenant en outre :
un pilote de conversion photoélectrique configuré pour convertir un signal optique et un signal électrique l'un en l'autre.

6. Module d'accès optique selon la revendication 5, dans lequel le pilote de conversion photoélectrique comprend un récepteur et un émetteur, dans lequel
l'émetteur est configuré pour moduler un signal électrique transmis par le module de traitement de signal électrique (202) en un signal optique et pour transmettre le signal optique ; et
le récepteur est configuré pour démoduler un signal optique reçu en un signal électrique et pour transmettre le signal électrique au module de traitement de signal électrique (202).

7. Module d'accès optique selon la revendication 6, dans lequel l'émetteur comprend un laser à semi-conducteur, et le récepteur comprend un photodétecteur à semi-conducteur.

8. Module d'accès optique selon la revendication 7, dans lequel le pilote de conversion photoélectrique comprend une ou plusieurs combinaison(s) du laser à semi-conducteur et du photodétecteur à semi-conducteur.

9. Module d'accès optique selon la revendication 1, comprenant en outre :
un module d'alimentation configuré pour obtenir une énergie électrique fournie par une source d'alimentation à courant continu, dans lequel l'énergie électrique est configurée pour alimenter le module d'accès optique.

10. Module d'accès optique selon l'une quelconque des revendications 1 à 9, dans lequel le module d'accès optique est applicable à une cage de module optique d'un commutateur ou d'un routeur.
